# EUROPEAN PATENT APPLICATION

(11) **EP 4 604 348 A1**
(43) Date of publication of application: **20.08.2025**
(21) Application number: 25152272.8
(22) Date of filing: 16.01.2025
(51) Int. Cl.: H02J 3/32, B60L 55/00, H02J 3/38

(54) **POWER SUPPLY SYSTEM**

(30) Priority: 14.02.2024 JP 2024019915; 08.07.2024 JP 2024109536
(71) Applicant: TOYOTA JIDOSHA KABUSHIKI KAISHA, Toyota-shi, Aichi-ken 471-8571 (JP)
(72) Inventor: MIYAZONO, Yuya, Toyota-shi, Aichi-ken 471-8571 (JP); CHINO, Ryohei, Toyota-shi, Aichi-ken 471-8571 (JP); ONO, Hironaga, Toyota-shi, Aichi-ken 471-8571 (JP)
(74) Representative: Cabinet Beau de Loménie

(57) **Abstract**

A power supply system (101) supplies alternating current power from a system power supply (900) to a load (123) of a house (101A). A first electromagnetic switch (51) is configured to switch electrical connection and disconnection between the leakage breaker (1) and the overcurrent breaker (113). A second electromagnetic switch (52) is configured to switch electrical connection and disconnection between the first electromagnetic switch (51) and the power supply device (3) and switch electrical connection and disconnection between the overcurrent breaker (113) and the power supply device 3.

## Description

### 1. Field of the Invention

The present disclosure relates to a power supply system.

### 2. Description of Related Art

In a power supply system capable of supplying power from a system power supply to a power load of a house, power from a vehicle can be supplied to the power load mainly in an emergency (a power failure of the system power supply, a power shortage of the system power supply, and the like). In addition, a proposal has been made to perform power supply from the vehicle to the power load on a daily basis (such as a period in which an electricity charge of the system power supply is high). Japanese Unexamined Patent Application Publication No. 2019-71721 (JP 2019-71721 A) discloses a power supply system that can utilize power stored in an electrified vehicle in a power failure.

### SUMMARY OF THE INVENTION

A phase of alternating current power supplied from a system power supply and a phase of alternating current power supplied from a vehicle is different. Therefore, it is not preferable to simultaneously supply the alternating current power from the system power supply and the alternating current power from the vehicle to a power load. It is desirable that power supply from the vehicle to the power load is implementable with a system configuration as simple as possible.

The present disclosure provides a power supply system that can supply power from a vehicle to a power load with a simple system configuration.

A power supply system according to an aspect of the present disclosure supplies alternating current power from a system power supply to a power load of a house. The power supply system includes a current breaker, a load breaker, a power conversion device, a first switch, and a second switch. The current breaker receives the alternating current power from the system power supply to the house and disconnect the alternating current power during at least one of leakage or overcurrent. The load breaker is configured to electrically disconnect the current breaker and the power load from each other. The power conversion device is configured to supply, in a case where a vehicle is connected, alternating current power from the vehicle to the power load. The first switch is configured to switch electrical connection and disconnection between the current breaker and the load breaker. The second switch is configured to switch electrical connection and disconnection between the first switch and the power conversion device and switch electrical connection and disconnection between the load breaker and the power conversion device.

In the power supply system, the house may include a power conditioning system configured to receive generated power of a photovoltaic power generation device. The power conversion device may be configured to charge, in a case where the vehicle is connected, the vehicle with alternating current power from the power conditioning system. The power supply system may further include a third switch configured to switch electrical connection and disconnection between the power conditioning system and the power conversion device.

In the power supply system, the power conversion device may be further configured to charge, in a case where the vehicle is connected, the vehicle with alternating current power from the current breaker. The power supply system may further include a third switch configured to switch electrical connection and disconnection between the current breaker and the power conversion device.

In the power supply system, in a case where the vehicle is connected to the power conversion device and a current electricity charge is higher than an electricity charge at a time when power currently charged in the vehicle is charged, the first switch may be opened and the second switch may be closed.

In the power supply system, in a case where the vehicle is connected to the power conversion device and the current electricity charge is higher than an electricity charge at a time when the vehicle is previously charged, the first switch may be opened and the second switch may be closed.

The power supply system may further include a control device configured to control the first switch and the second switch.
The control device may, in a case where power is supplied from the system power supply to the power load, close the first switch and open the second switch. The control device may, in a case where power is supplied from the vehicle to the power load, open the first switch and close the second switch.

The power supply system may further include a control device configured to control the first switch, the second switch, and the third switch.
The control device may, in a case where power is supplied form the vehicle, open the first switch, close the second switch, and open the third switch. The control device may, in a case where power is charged to the vehicle, close the first switch, open the second switch, and close the third switch. The control device may, in a case where power is not supplied from the vehicle and power is not charged to the vehicle, close the first switch, open the second switch, and open the third switch.

According to the present disclosure, it is possible to supply power from a vehicle to a power load with a simple system configuration.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a circuit block diagram showing a first example of a configuration of a power supply system according to Embodiment 1;
FIG. 2 is a circuit block diagram showing a second example of the configuration of the power supply system according to Embodiment 1;
FIG. 3 is a flowchart showing a first example of a processing procedure related to control of an electromagnetic switch;
FIG. 4 is a circuit block diagram showing a first example of a configuration of a power supply system according to Embodiment 2;
FIG. 5 is a circuit block diagram showing a second example of the configuration of the power supply system according to Embodiment 2;
FIG. 6 is a circuit block diagram showing a third example of the configuration of the power supply system according to Embodiment 2;
FIG. 7 is a circuit block diagram showing a fourth example of the configuration of the power supply system according to Embodiment 2;
FIG. 8 is a flowchart showing a second example of the processing procedure related to the control of the electromagnetic switch;
FIG. 9 is a flowchart showing a third example of a processing procedure related to the control of the electromagnetic switch; and
FIG. 10 is a circuit block diagram showing a modification example of the first example of the configuration of the power supply system according to Embodiment 1.

### DETAILED DESCRIPTION OF EMBODIMENTS

Hereinafter, embodiments of the present disclosure will be described in detail with reference to the drawings. Note that, in the drawings, the same or equivalent parts are denoted by the same reference numerals, and description thereof will not be repeated.

### Embodiment 1

### System Configuration

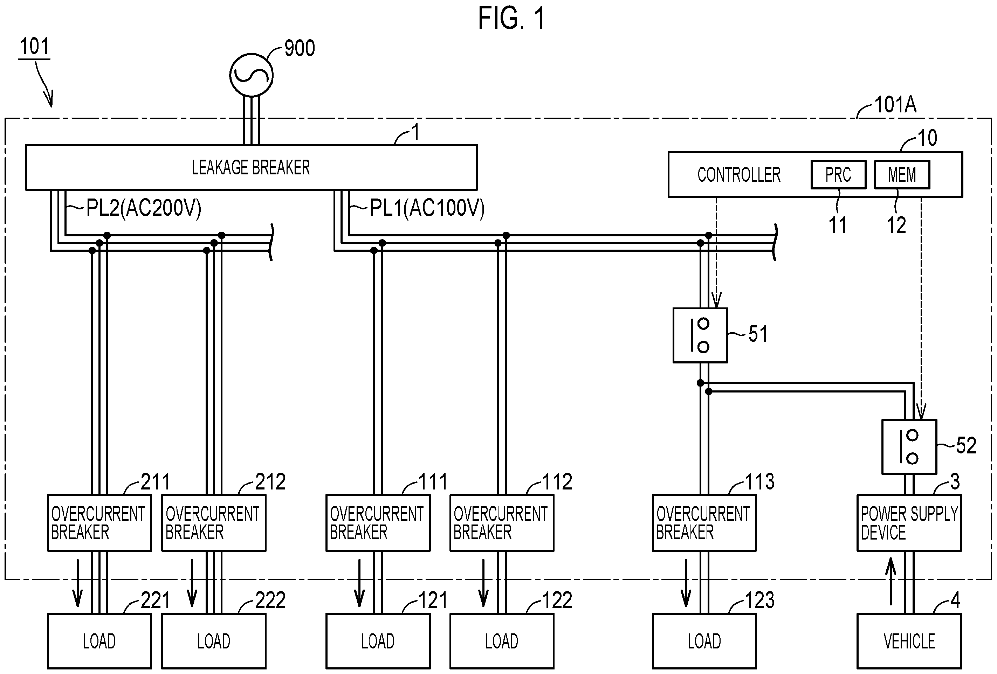

FIG. 1 is a circuit block diagram showing a first example of a configuration of a power supply system according to Embodiment 1. A power supply system 101 supplies power from a system power supply 900 to a load of a house 101A. The house 101A is typically a house (a structure in which a person lives). Note that the house 101A may include a structure that is not for residential use, such as a building or a facility that accommodates equipment. The load is, for example, various electrical devices, and may be disposed in an inside (interior) of the house 101A or may be in an outside (exterior) of the house 101A.

The power supply system 101 includes a leakage breaker 1, overcurrent breakers 111 to 113, 211, 212, and a power supply device 3. The number of overcurrent breakers is not particularly limited.

The leakage breaker 1 receives alternating current power from the system power supply 900 to the house 101A. A circuit PL1 for transmitting AC 100 V of alternating current power and a circuit PL2 for transmitting AC 200 V of alternating current power are connected to the leakage breaker 1. The leakage breaker 1 electrically disconnects the system power supply 900 and the circuits PL1, PL2 from each other at a time of detection of leakage. The leakage breaker 1 corresponds to a "current breaker" according to the present disclosure.

The overcurrent breakers 111 to 113 are electrically connected to the circuit PL1 for AC 100 V. Although not shown, the house 101A includes a plurality of rooms. For example, a load 121 is provided in a certain room, a load 122 is provided in another room, and a load 123 is provided in still another room. The overcurrent breakers 111 to 113 are provided corresponding to different rooms of the house 101A. The overcurrent breakers 111 to 113 are configured to electrically disconnect the leakage breaker 1 and the loads 121 to 123 from each other at a time of detection of overcurrent. The overcurrent breaker 113 corresponds to a "load breaker" according to the present disclosure. Each load corresponds to a "power load" according to the present disclosure.

The overcurrent breakers 211, 212 are electrically connected to the circuit PL2 for AC 200 V. The overcurrent breakers 211, 212 are provided in different rooms of the house 101A, similarly to the overcurrent breakers 111 to 113 for the AC 100 V. The overcurrent breakers 211, 212 are configured to electrically disconnect the leakage breaker 1 and the loads 221, 222 from each other at the time of detection of overcurrent.

The power supply device 3 is configured to be connected to a vehicle 4 via a power supply cable (not shown). The vehicle 4 is an electrified vehicle on which a traveling battery is mounted and that can receive power from and transmit power to an outside of the vehicle, and specifically is a battery electric vehicle (BEV) or a plug-in hybrid electric vehicle (PHEV). The power supply device 3 includes an AC-DC conversion device, and is configured to supply alternating current power from the vehicle 4 to a load (in this example, the load 123) in a case where the vehicle 4 is connected. The power supply device 3 is an example of a "power conversion device" according to the present disclosure.

The power supply system 101 further includes a first electromagnetic switch 51, a second electromagnetic switch 52, and a controller 10.

A first end of the first electromagnetic switch 51 is electrically connected to the circuit PL1 for AC 100 V. A second end of the first electromagnetic switch 51 is electrically connected to the overcurrent breaker 113. As a result, the first electromagnetic switch 51 is configured to switch electrical connection and disconnection between the leakage breaker 1 and the overcurrent breaker 113 in response to a control command from the controller 10.

A first end of the second electromagnetic switch 52 is electrically connected to the second end of the first electromagnetic switch 51 and is electrically connected to the overcurrent breaker 113. A second end of the second electromagnetic switch 52 is electrically connected to the power supply device 3. As a result, the second electromagnetic switch 52 is configured to switch electrical connection and disconnection between the first electromagnetic switch 51 and the power supply device 3 and switch electrical connection and disconnection between the overcurrent breaker 113 and the power supply device 3 in response to the control command from the controller 10.

Although not shown, the leakage breaker 1 and the overcurrent breakers 111 to 113, 211, 212 are provided in a distribution board (may be a switch board depending on a type of the house 101A). In a case of a distribution board having a large size, the first electromagnetic switch 51 and the second electromagnetic switch 52 may be disposed inside the distribution board. In a case of a distribution board having a small size, the first electromagnetic switch 51 and the second electromagnetic switch 52 may be disposed in a housing that is externally attached to the distribution board and is provided near the distribution board.

The first electromagnetic switch 51 corresponds to a "first switch" according to the present disclosure, and the second electromagnetic switch 52 corresponds to a "second switch" according to the present disclosure. The first electromagnetic switch 51 and the second electromagnetic switch 52 are also collectively referred to as an "electromagnetic switch".

The controller 10 is computer equipment including a processor 11 and a memory 12, and is, for example, a home energy management system (HEMS) controller. The controller 10 outputs the control command for opening and closing (turning on and off) each of the first electromagnetic switch 51 and the second electromagnetic switch 52. As will be described later, the controller 10 may acquire power information (information on power trading, information on electricity charge, and the like) of the system power supply 900 from an energy management server (not shown), and open and close the first electromagnetic switch 51 and the second electromagnetic switch 52 or control the power supply device 3 according to the acquired power information (that is, supply power from the vehicle 4). The controller 10 corresponds to a "control device" according to the present disclosure.

A phase of the alternating current power supplied from the system power supply 900 and the alternating current power supplied from the vehicle 4 is different. Therefore, it is not preferable to simultaneously supply the alternating current power from the system power supply 900 and the alternating current power from the vehicle 4 to the loads 121 to 123. According to Embodiment 1, which of the two pieces of alternating current power is supplied to the loads 121 to 123 can be selected by using the first electromagnetic switch 51 and the second electromagnetic switch 52.

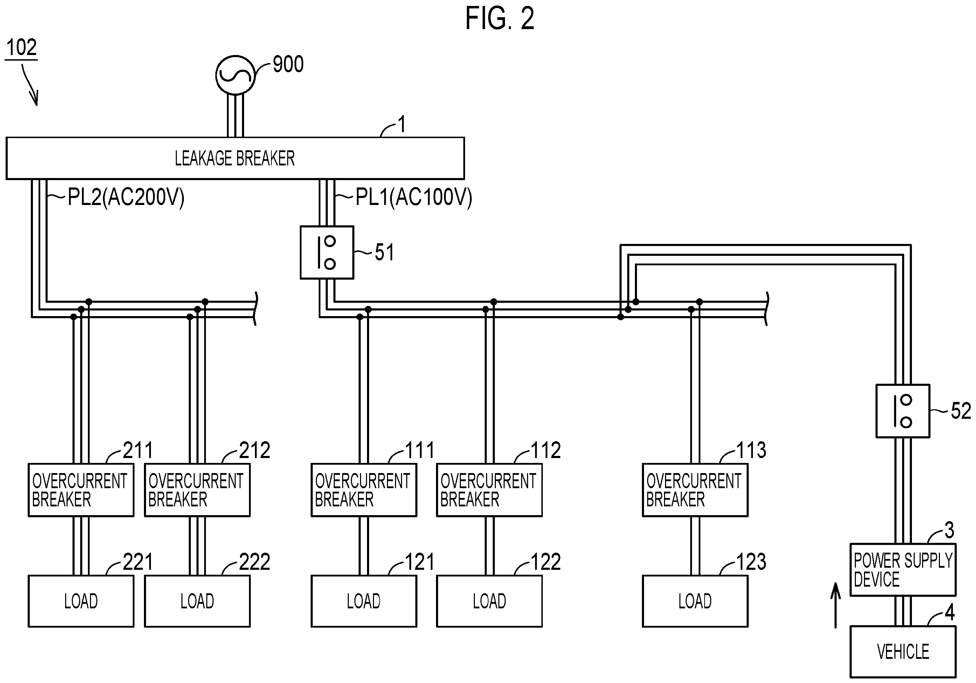

FIG. 2 is a circuit block diagram showing a second example of the configuration of the power supply system according to Embodiment 1. In order to avoid complication of the drawings, the illustrations of the house 101A and the controller 10 are omitted in FIG. 2 and subsequent drawings.

A power supply system 102 shown in FIG. 2 is different from the power supply system 101 shown in FIG. 1 in that the first electromagnetic switch 51 is electrically connected to the circuit PL1 for AC 100 V, and in that the second electromagnetic switch 52 is electrically connected to the circuit PL1 for AC 100 V.

In the power supply system 101 shown in FIG. 1, the first electromagnetic switch 51 is provided at a position corresponding to upstream of the overcurrent breaker 113. Therefore, solely the overcurrent breaker 113 is disconnected from the leakage breaker 1 by the opening and closing of the first electromagnetic switch 51. On the other hand, the first electromagnetic switch 51 shown in FIG. 2 is provided not at a position corresponding only to the upstream of the overcurrent breaker 113, but at a position corresponding also to upstream of the overcurrent breakers 111, 112 of the other rooms. Therefore, in a case where the first electromagnetic switch 51 is turned off, all of the three overcurrent breakers 111 to 113 are disconnected from the leakage breaker 1.

As described above, in a case where the electrical connection and disconnection between the leakage breaker 1 and at least one overcurrent breaker can be switched, the disposition of the first electromagnetic switch 51 is not limited. The first electromagnetic switch 51 may be disposed anywhere as long as it is possible to switch the connection and disconnection between the leakage breaker 1 and at least one overcurrent breaker of the overcurrent breakers 111 to 113.

In addition, in the second example, the first end of the second electromagnetic switch 52 is electrically connected to the circuit PL1 (that is, single-phase three wires) for AC 100 V. As a result, the alternating current power from the vehicle 4 can be supplied not only to the load 123 but also to other loads 121, 122.

Since the configuration of the power supply system 102 except for the disposition of the first electromagnetic switch 51 and the second electromagnetic switch 52 is the same as the corresponding configuration of the power supply system 101, a detailed description thereof will not be repeated.

Another electromagnetic switch (not shown) in place of the first electromagnetic switch 51 may be electrically connected to, for example, between the overcurrent breaker 113 and the load 123 (in other words, a position corresponding to downstream of the load 123).

### Processing Flow

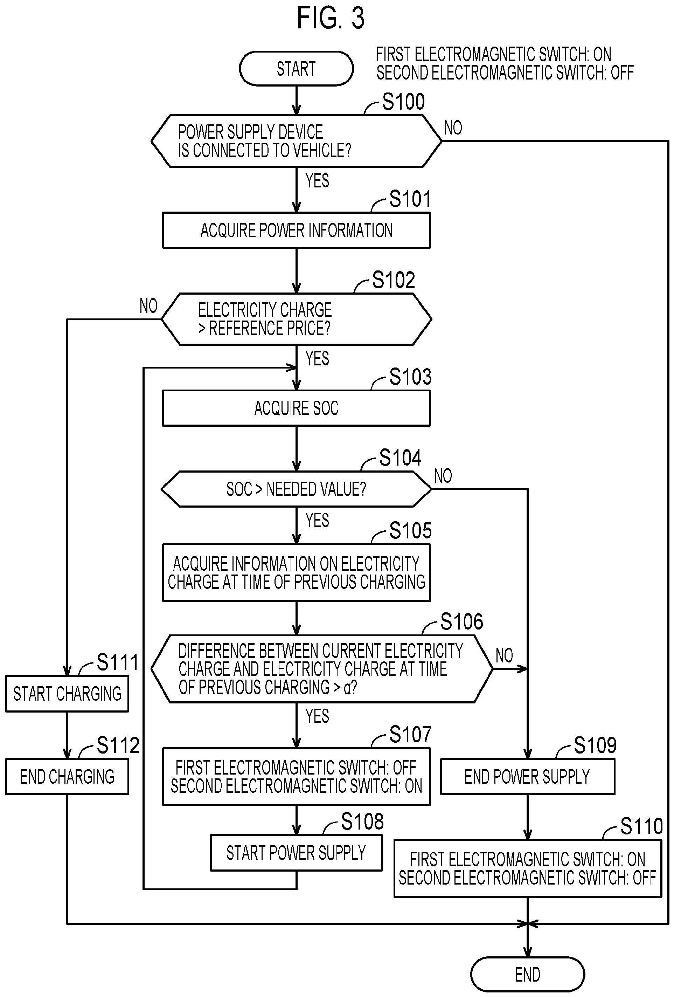

FIG. 3 is a flowchart showing a first example of a processing procedure related to control of the electromagnetic switch. Processing shown in the flowchart is executed when a predetermined condition is satisfied (for example, every predetermined period). Each step is implemented by software processing by the controller 10 (processor 11), but may be implemented by hardware (electric circuit) disposed in the controller 10. Hereinafter, step is abbreviated as S. The same applies to other flowcharts described below.

Here, the power supply system 101 shown in FIG. 1 will be described as an example. At start of serial processing, it is assumed that the first electromagnetic switch 51 is turned on (closed) and the second electromagnetic switch 52 is turned off (opened).

With reference to FIGS. 1 and 3, in S100, the controller 10 determines whether or not the power supply device 3 is connected to the vehicle 4. In a case where the power supply device 3 is connected to the vehicle 4 (YES in S100), the controller 10 proceeds with the processing to S101. In a case where the power supply device 3 is not connected to the vehicle 4 (NO in S100), the controller 10 ends the processing. The processing of S100 may be omitted.

In S101, the controller 10 acquires power information of the system power supply 900 (in this example, information on current electricity charge) from, for example, the energy management server (not shown).

In S102, the controller 10 determines whether or not a current electricity charge acquired in S101 is higher than a reference price (for example, an average price of an electricity charge of the day). In a case where the current electricity charge is higher than the reference price (YES in S102), the controller 10 proceeds with the processing to S103.

In S103, the controller 10 acquires a state of charge (SOC) of the battery mounted on the vehicle 4 through communication with the vehicle 4 or the like. Then, the controller 10 determines whether or not the acquired SOC is higher than a needed value (S104). The needed value is, for example, a value corresponding to a power amount needed for the vehicle 4 to travel the next day. The needed value may be a predetermined fixed value or may be a variable value determined according to a usage record of the vehicle 4.

In a case where the SOC is higher than the needed value (YES in S104), the controller 10 proceeds with the processing to S105. In a case where the SOC is equal to or less than the needed value (NO in S104), the controller 10 proceeds with the processing to S109.

In S105, the controller 10 acquires information on an electricity charge when the vehicle 4 is previously charged from, for example, the energy management server (not shown). Then, in S106, the controller 10 calculates a difference between the current electricity charge acquired in S101 and the electricity charge at the time of the previous charging acquired in S105, and determines whether or not the difference is larger than a threshold value α. In a case where the difference is larger than the threshold value α (YES in S106), the controller 10 proceeds with the processing to S107. In a case where the difference is equal to or less than the threshold value α (NO in S106), the controller 10 proceeds with the processing to S109. In the present embodiment, the threshold value α is a positive value, but the threshold value α may be zero. Further, although an example of calculating the difference has been described in the embodiment, determination equivalent to S106 may be made based on, for example, a ratio (b/a) between b and a instead of the difference.

Here, for the sake of description, the current electricity charge and the electricity charge at the time of the previous charging are respectively denoted by the a and the b. In addition, an empty capacity of power in the load 123 is denoted by x. Further, a power amount consumed by an ECU or the like when the vehicle 4 is charged (loss of the power amount) is denoted by L. In this case, a profit obtained by the user when the vehicle 4 discharges to the load 123 is denoted by bx - ax - aL. In order for a value of bx - ax - aL to be larger than zero, a relationship of (b - a) > aL/x needs to be satisfied. That is, as the difference between b and a is smaller, a threshold value of the x for the user to obtain the profit is larger. The controller 10 may set a value of aL/x to the threshold value α, or may set a value obtained by adding a certain value to the value of aL/x to the threshold value α. As a result, it is possible to reduce occurrence of a financial loss due to the power supply from the vehicle 4 to the load 123. The controller 10 may acquire information on the x from the load 123. In addition, the L may be a fixed value stored in the memory 12 (FIG. 1).

In S105, the information on the electricity charge at the time of the previous charging is acquired, but the present disclosure is not limited thereto. For example, in a case where the power currently stored in the vehicle 4 has been stored by a plurality of times of charging in the past, information on an average value of electricity charges in the times of charging in the past may be acquired.

The controller 10 turns off the first electromagnetic switch 51 and turns on the second electromagnetic switch 52 (S107). Then, the controller 10 controls the power supply device 3 such that the power supply from the vehicle 4 to the load 123 is started (S108), and returns the processing to S103.

When the power supply from the vehicle 4 is continued, the SOC decreases with the passage of time. When the SOC is equal to or less than the needed value (NO in S104), the controller 10 controls the power supply device 3 such that the power supply from the vehicle 4 to the load 123 is ended (S109). Then, the controller 10 turns on the first electromagnetic switch 51 and turns off the second electromagnetic switch 52 (S110). As a result, the serial processing is terminated.

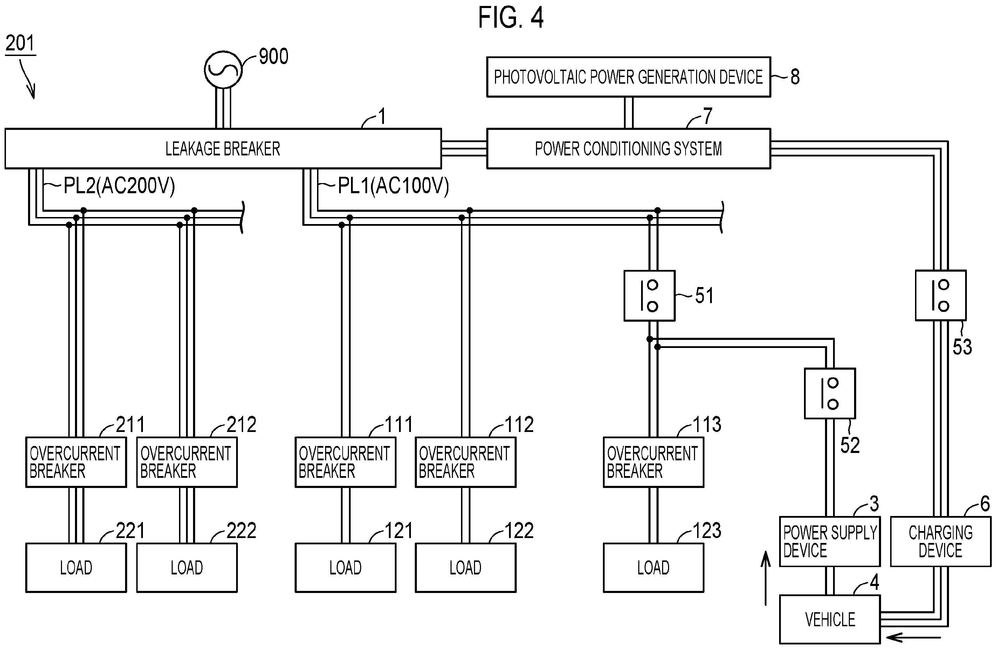

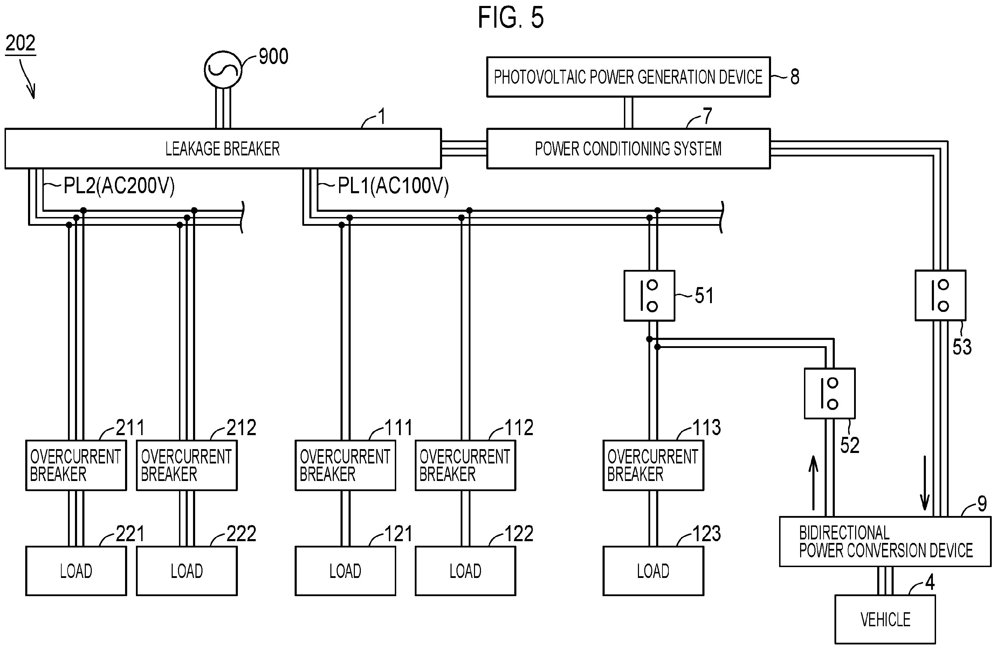

As will be described in Embodiment 2 to be described later, in a case where a charging device is provided in addition to the power supply device 3 or a bidirectional power conversion device is provided instead of the power supply device 3 (refer to FIGS. 4 and 5), the controller 10 may control the charging device or the bidirectional power conversion device such that the vehicle 4 is charged in a case where the electricity charge is equal to or less than the reference price (NO in S102) (S111, S 112).

In FIG. 3, an example in which the subsequent processing is changed depending on whether or not the electricity charge is higher than the reference price has been described. Alternatively, the controller 10 may switch the processing in response to whether or not a current time is a nighttime period (a period in which a nighttime charge is applied). As a result, the electricity charge can be saved.

Alternatively, the controller 10 may switch the processing according to whether or not the current time is a period in which power demand of the house 101A reaches a peak. By performing power supply from the vehicle 4 in the period in which the power demand reaches the peak, it is possible to cover the peak of the power demand even when the maximum supply current from the system power supply 900 is low, and thus it is possible to reduce so-called contracted amperes. Therefore, the electricity charge can be saved.

As described above, in Embodiment 1, the power supply systems 101, 102 include the first electromagnetic switch 51 and the second electromagnetic switch 52. By using the first electromagnetic switch 51 and the second electromagnetic switch 52, it is possible to select whether to supply the alternating current power from the system power supply 900 and the alternating current power from the vehicle 4 to the loads 121 to 123. More specifically, the alternating current power from the system power supply 900 is selected by turning on the first electromagnetic switch 51 and turning off the second electromagnetic switch 52. On the other hand, the alternating current power from the vehicle 4 is selected by turning off the first electromagnetic switch 51 and turning on the second electromagnetic switch 52. Therefore, according to Embodiment 1, the power from the vehicle 4 can be supplied to the load with a simple system configuration in which the two electromagnetic switches are merely added.

### Embodiment 2

In Embodiment 2, a configuration in which a vehicle can be charged with power generated by a photovoltaic power generation device will be described.

### System Configuration

FIG. 4 is a circuit block diagram showing a first example of a configuration of a power supply system according to Embodiment 2. A power supply system 201 shown in FIG. 4 is different from the power supply systems 101, 102 (refer to FIGS. 1 and 2) according to Embodiment 1 in that a third electromagnetic switch 53, a charging device 6, a power conditioning system (PCS) 7, and a photovoltaic power generation device 8 are further included.

A first end of the third electromagnetic switch 53 is electrically connected to the power conditioning system 7. A second end of the third electromagnetic switch 53 is electrically connected to the charging device 6. As a result, the third electromagnetic switch 53 is configured to switch electrical connection and disconnection between the power conditioning system 7 and the charging device 6 in response to the control command from the controller 10 (refer to FIG. 1). The third electromagnetic switch 53 corresponds to a "third switch" according to the present disclosure.

The charging device 6 is configured to be connected to the vehicle 4 via a charging cable (the charging cable and the power supply cable may be used in common) (not shown). The charging device 6 includes an AC-DC conversion device, and is configured to charge the vehicle 4 with alternating current power from the power conditioning system 7 in a case where the vehicle 4 is connected. In this example, the power supply device 3 and the charging device 6 correspond to the "power conversion device" according to the present disclosure.

The power conditioning system 7 receives direct current power from the photovoltaic power generation device 8 and converts the direct current power into alternating current power. The power conditioning system 7 outputs the alternating current power to the leakage breaker 1 and outputs the alternating current power to the charging device 6 via the third electromagnetic switch 53.

Since the configuration of the power supply system 201 except for the third electromagnetic switch 53, the charging device 6, the power conditioning system 7, and the photovoltaic power generation device 8 is the same as the corresponding configuration of the power supply systems 101, 102, a detailed description thereof will not be repeated.

FIG. 5 is a circuit block diagram showing a second example of the configuration of the power supply system according to Embodiment 2. A power supply system 202 shown in FIG. 5 is different from the power supply system 201 (refer to FIG. 4) in that a bidirectional power conversion device 9 is included instead of the power supply device 3 and the charging device 6 (in other words, the power supply device 3 and the charging device 6 are integrated into one).

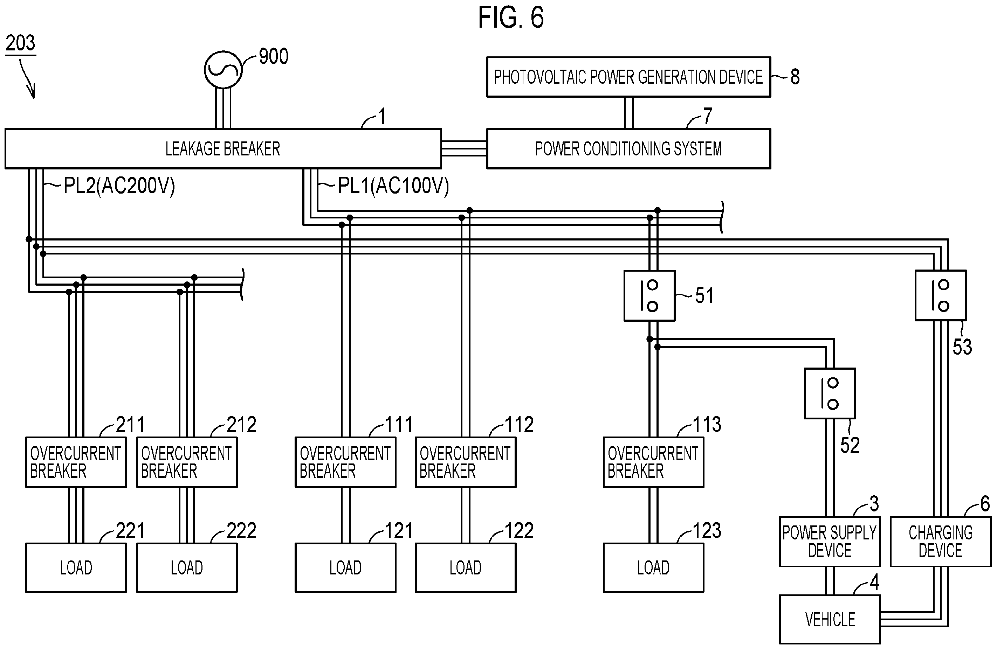

FIG. 6 is a circuit block diagram showing a third example of the configuration of the power supply system according to Embodiment 2. A power supply system 203 shown in FIG. 6 is different from the power supply system 201 (refer to FIG. 4) in that the first end of the third electromagnetic switch 53 is electrically connected to the leakage breaker 1 (the circuit PL2 for AC 200 V) instead of the power conditioning system 7. In FIG. 6, the bidirectional power conversion device 9 may be provided instead of the power supply device 3 and the charging device 6.

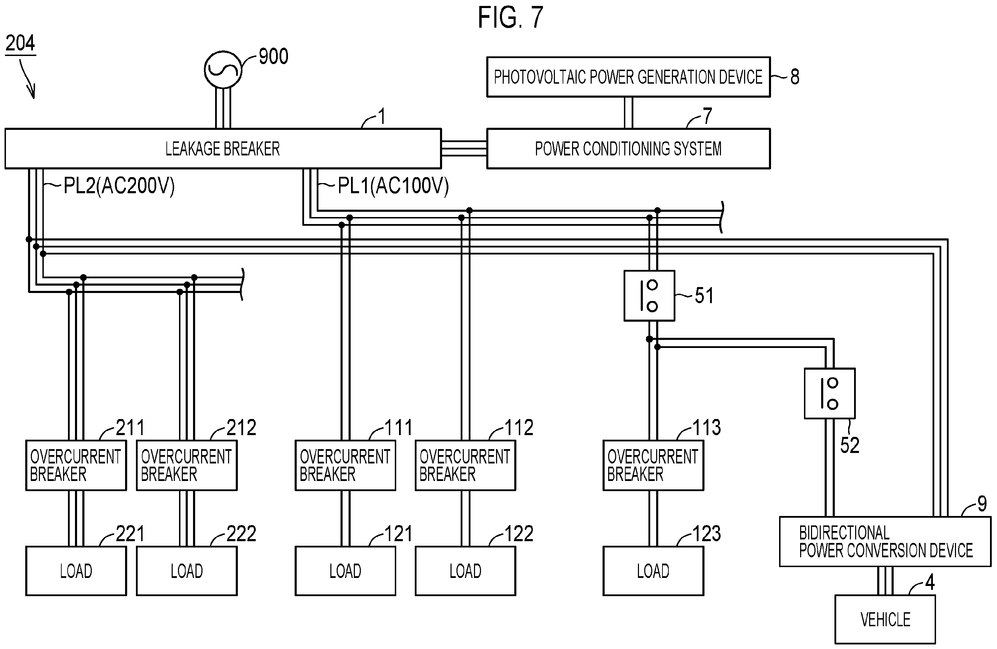

FIG. 7 is a circuit block diagram showing a fourth example of the configuration of the power supply system according to Embodiment 2. A power supply system 204 shown in FIG. 7 is different from the power supply system 202 (refer to FIG. 5) in the following two points. A first difference is that the bidirectional power conversion device 9 is electrically connected to the leakage breaker 1 (the circuit PL2 for AC 200 V). A second difference is that the power supply system 204 does not include the third electromagnetic switch 53 and the bidirectional power conversion device 9 can switch between the power supply and the charging of the vehicle 4.

Since the configurations of the power supply systems 202 to 204 shown in FIGS. 5 to 7 except for the above are the same as the corresponding configurations of the power supply system 201 shown in FIG. 4, a detailed description will not be repeated.

### Processing Flow

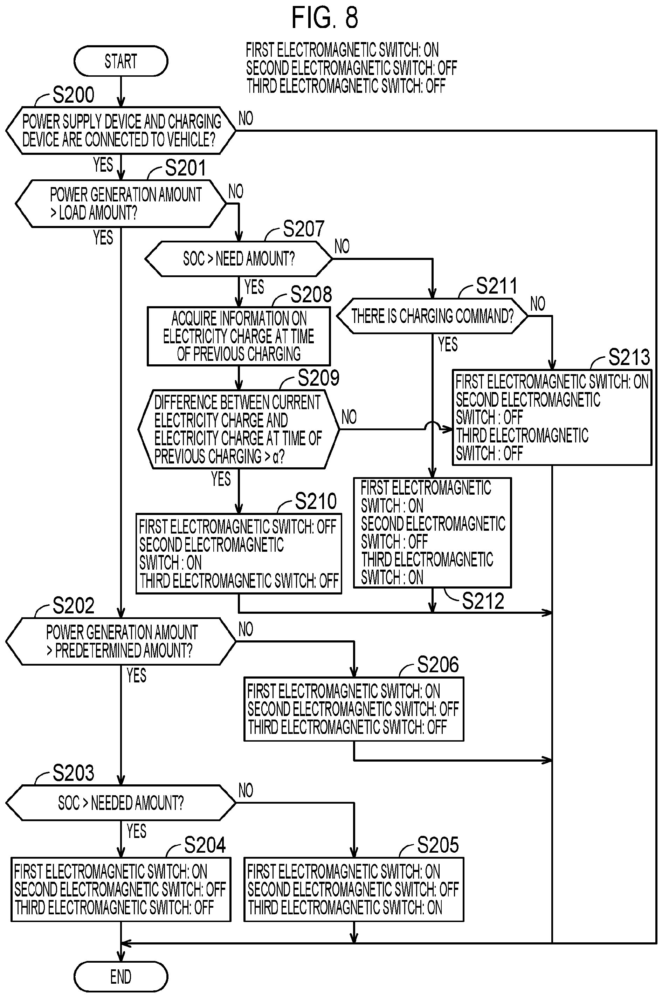

FIG. 8 is a flowchart showing a second example of the processing procedure related to the control of the electromagnetic switch. Here, the power supply system 201 shown in FIG. 4 will be described as an example. At start of serial processing, it is assumed that the first electromagnetic switch 51 is turned on, the second electromagnetic switch 52 is turned off, and the third electromagnetic switch 53 is turned off.

In S200, the controller 10 determines whether or not the power supply device 3 and the charging device 6 are connected to the vehicle 4. In a case where the power supply device 3 and the charging device 6 are connected to the vehicle 4 (YES in S200), the controller 10 proceeds with the processing to S201. In a case where the power supply device 3 and the charging device 6 are not connected to the vehicle 4 (NO in S200), the controller 10 ends the processing. The processing of S200 may be omitted.

In S201, the controller 10 acquires information related to the generated power of the photovoltaic power generation device 8 and acquires information related to power consumption (load power) of each load in the house 101A. The controller 10 determines whether a generated power amount (power generation amount) within a specified time is larger than a load power amount (load amount) within the same specified time. In a case where the power generation amount is larger than the load amount (YES in S201), the controller 10 proceeds with the processing to S202.

In S202, the controller 10 determines whether or not the power generation amount of the photovoltaic power generation device 8 is larger than a predetermined amount. The predetermined amount is determined to be a power amount sufficient to charge the vehicle 4. In a case where the power generation amount of the photovoltaic power generation device 8 is larger than the predetermined amount (YES in S202), the controller 10 proceeds with the processing to S203.

In S203, the controller 10 determines whether the SOC of the vehicle 4 is higher than a needed value. As described above, the needed value may be determined as a value corresponding to the power amount needed for the vehicle 4 to travel the next day. In a case where the SOC is higher than the needed value (YES in S203), that is, in a case where the power generation amount of the photovoltaic power generation device 8 is sufficient to charge the vehicle 4, but the power amount needed for traveling is already stored in the vehicle 4, the controller 10 turns on the first electromagnetic switch 51, turns off the second electromagnetic switch 52, and turns off the third electromagnetic switch 53 (S204). In this case, both the power supply from the vehicle 4 and the charging of the vehicle 4 are not performed. The alternating current power of the system power supply 900 or the generated power of the photovoltaic power generation device 8 (power after AC conversion) is supplied to the load 123.

In a case where the SOC is equal to or less than the needed value (NO in S203), that is, in a case where the power generation amount of the photovoltaic power generation device 8 is sufficient to charge the vehicle 4 and the power amount stored in the vehicle 4 is insufficient, the controller 10 turns on the first electromagnetic switch 51, turns off the second electromagnetic switch 52, and turns on the third electromagnetic switch 53 (S205). In this case, the vehicle 4 is charged with the generated power of the photovoltaic power generation device 8. The alternating current power of the system power supply 900 or the generated power of the photovoltaic power generation device 8 is supplied to the load 123.

Returning to S202, in a case where the power generation amount of the photovoltaic power generation device 8 is equal to or less than the predetermined amount (NO in S202), that is, in a case where the power generation amount is larger than the load amount, but is not sufficient to charge the vehicle 4, the controller 10 turns on the first electromagnetic switch 51, turns off the second electromagnetic switch 52, and turns off the third electromagnetic switch 53 (S206). In this case, both the power supply from the vehicle 4 and the charging of the vehicle 4 are not performed. The alternating current power of the system power supply 900 or the generated power of the photovoltaic power generation device 8 is supplied to the load 123.

Returning to S201, in a case where the power generation amount of the photovoltaic power generation device 8 is equal to or less than the load amount (NO in S201), that is, in a case where the photovoltaic power generation device 8 alone cannot satisfy the power demand of the house 101A, the controller 10 proceeds with the processing to S207. In S207, the controller 10 determines whether the SOC of the vehicle 4 is higher than a needed value. The needed value may be the same value as the needed value in S203 or may be a different value.

In a case where the SOC is higher than the needed value (YES in S207), that is, when there is a margin in the power amount stored in the vehicle 4, the controller 10 proceeds with the processing to S208. In a case where the SOC is equal to or less than the needed value (NO in S207), the controller 10 progresses the processing to S211.

In S208, the controller 10 acquires information on the electricity charge when the vehicle 4 is previously charged from, for example, the energy management server (not shown). Then, in S209, the controller 10 calculates a difference between the current electricity charge and the electricity charge at the time of the previous charging acquired in S208, and determines whether or not the difference is larger than the threshold value α. In a case where the difference is larger than the threshold value α (YES in S209), the controller 10 proceeds with the processing to S210. In a case where the difference is equal to or less than the threshold value α (NO in S209), the controller 10 proceeds with the processing to S213. In S209, the same processing as S106 in FIG. 3 is performed, so that a detailed description thereof will be omitted.

The controller 10 turns off the first electromagnetic switch 51, turns on the second electromagnetic switch 52, and turns off the third electromagnetic switch 53 (S210). That is, the power supply from the vehicle 4 to the load 123 is performed instead of the power supply from the system power supply 900.

In a case where the SOC is equal to or less than the needed value (NO in S207), that is, in a case where there is no margin in the power amount stored in the vehicle 4 to supply power to the outside, the controller 10 determines whether or not there is a charging command of the vehicle 4 (S211).

In a case where there is the charging command (YES in S211), the controller 10 turns on the first electromagnetic switch 51, turns off the second electromagnetic switch 52, and turns on the third electromagnetic switch 53 (S212). In this case, the vehicle 4 is charged with the generated power of the photovoltaic power generation device 8. The alternating current power from the system power supply 900 or the generated power of the photovoltaic power generation device 8 is supplied to the load 123.

When there is no charging command (NO in S211), the controller 10 turns on the first electromagnetic switch 51, turns off the second electromagnetic switch 52, and turns off the third electromagnetic switch 53 (S213). In this case, both the power supply from the vehicle 4 and the charging of the vehicle 4 are not performed.

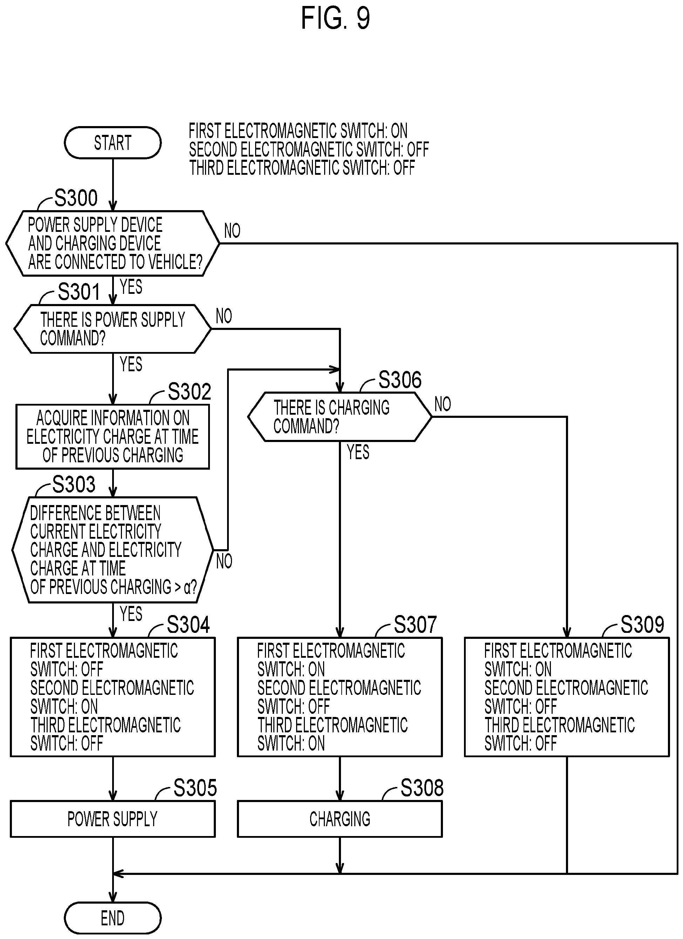

FIG. 9 is a flowchart showing a third example of the processing procedure related to the control of the electromagnetic switch. Here again, the power supply system 201 shown in FIG. 4 will be described as an example. At start of serial processing, it is assumed that the first electromagnetic switch 51 is turned on, the second electromagnetic switch 52 is turned off, and the third electromagnetic switch 53 is turned off.

In S300, the controller 10 determines whether or not the power supply device 3 and the charging device 6 are connected to the vehicle 4. In a case where the power supply device 3 and the charging device 6 are connected to the vehicle 4 (YES in S300), the controller 10 proceeds with the processing to S301. In a case where the power supply device 3 and the charging device 6 are not connected to the vehicle 4 (NO in S300), the controller 10 ends the processing. The processing of S300 may be omitted.

In S301, the controller 10 determines whether or not there is a power supply command. When there is the power supply command (YES in S301), the controller 10 proceeds with the processing to S302. When there is no power supply command (NO in S301), the controller 10 proceeds with the processing to S306.

In S302, the controller 10 acquires information on the electricity charge when the vehicle 4 is previously charged from, for example, the energy management server (not shown). Then, in S303, the controller 10 calculates a difference between the current electricity charge and the electricity charge at the time of the previous charging acquired in S302, and determines whether or not the difference is larger than the threshold value α. When the difference is larger than the threshold value α (YES in S303), the controller 10 proceeds with the processing to S304. When the difference is equal to or less than the threshold value α (NO in S303), the controller 10 proceeds with the processing to S306. In S303, the same processing as S106 in FIG. 3 is performed, so that a detailed description thereof will be omitted.

In S304, the controller 10 turns off the first electromagnetic switch 51, turns on the second electromagnetic switch 52, and turns off the third electromagnetic switch 53. Then, the controller 10 controls the power supply device 3 such that the power supply from the vehicle 4 is started (S305).

In S306, the controller 10 determines whether or not there is the charging command. In a case where there is the charging command (YES in S306), the controller 10 proceeds with the processing to S307, turns on the first electromagnetic switch 51, turns off the second electromagnetic switch 52, and turns on the third electromagnetic switch 53. Then, the controller 10 controls the charging device 6 such that the charging of the vehicle 4 is started (S308). The alternating current power from the system power supply 900 or the generated power of the photovoltaic power generation device 8 is supplied to the load 123.

In a case where there is neither power supply command nor charging command (NO in S306), the controller 10 proceeds with the processing to S309, turns on the first electromagnetic switch 51, turns off the second electromagnetic switch 52, and turns off the third electromagnetic switch 53. In this case, both the power supply from the vehicle 4 and the charging of the vehicle 4 are not performed. The alternating current power from the system power supply 900 or the generated power of the photovoltaic power generation device 8 is supplied to the load 123.

In FIGS. 8 and 9, the third electromagnetic switch 53 is described as being turned on or off. As shown in FIG. 7, even in a system configuration in which the third electromagnetic switch 53 is not provided, those skilled in the art will understand that the same function can be realized by switching between the charging and the power supply through the bidirectional power conversion device 9.

As described above, in Embodiment 2, the power supply systems 201 to 204 include the first electromagnetic switch 51 and the second electromagnetic switch 52, as in Embodiment 1. As a result, the power from the vehicle 4 can be supplied to the load with a simple system configuration in which the two electromagnetic switches are merely added. In addition, in Embodiment 2, the power supply systems 201 to 203 include the third electromagnetic switch 53. As a result, with a simple system configuration in which the third electromagnetic switch is merely added, it is possible to charge the vehicle 4 with the generated power of the photovoltaic power generation device 8 in addition to the supplied power from the vehicle 4.

In the embodiment, an example in which the leakage breaker is provided in the power supply system has been described, but the present disclosure is not limited thereto. Instead of the leakage breaker, an overcurrent breaker that electrically disconnects the system power supply 900 and the circuits PL1, PL2 from each other during overcurrent (at the time of detection of overcurrent detection), or a leakage interrupter with an overcurrent breaker that electrically disconnects the system power supply 900 and the circuits PL1, PL2 from each other during overcurrent and during leakage (at the time of detection of leakage) may be provided.

In the embodiment, an example in which the power supply device 3 and the bidirectional power conversion device 9 supply the power to the load 123 connected to the circuit PL1 for AC 100 V has been described, but the present disclosure is not limited thereto. A power supply device or a bidirectional power conversion device that supplies the power from the vehicle 4 to a load connected to the circuit PL2 for AC 200 V may be provided. The power supply device and the bidirectional power conversion device correspond to the "power conversion device" according to the present disclosure.

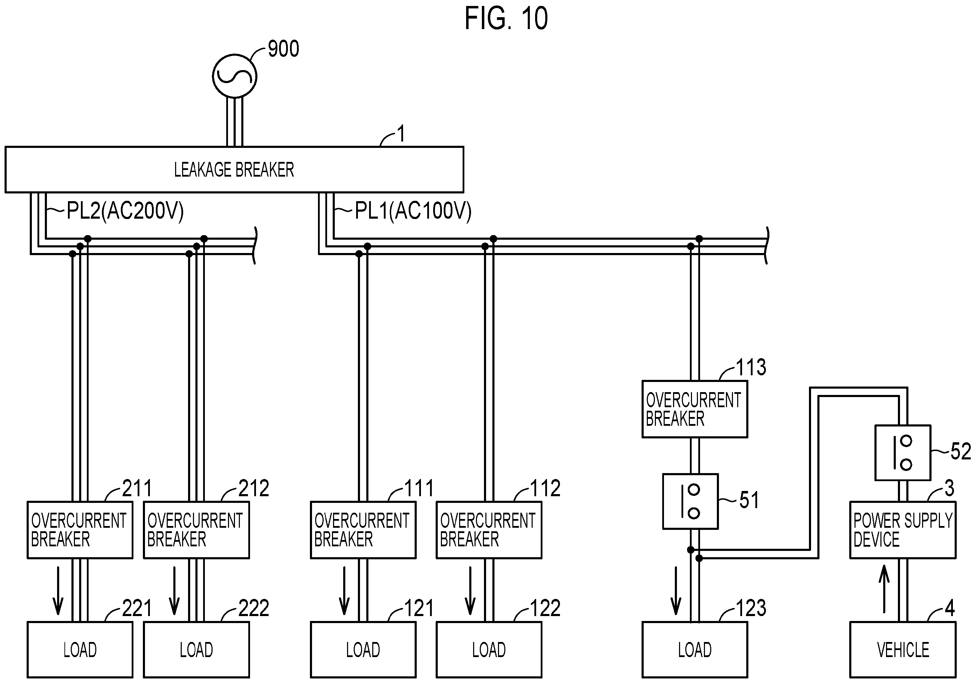

In the embodiment, an example shown in which the first electromagnetic switch 51 is electrically connected to the leakage breaker 1 and the overcurrent breaker 113 has been described, but the present disclosure is not limited thereto. As shown in FIG. 10, the first end of the first electromagnetic switch 51 may be electrically connected to the overcurrent breaker 113, and the second end of the first electromagnetic switch 51 may be electrically connected to the load 123. In this case, the first end of the second electromagnetic switch 52 is electrically connected to the overcurrent breaker 113 and the load 123. Although FIG. 10 shows a modification example of the power supply system 101 in FIG. 1, the power supply systems 102, 201, 202, 203, 204 may be similarly modified.

The embodiment disclosed herein is to be considered merely illustrative and not restrictive in all respects. The scope of the present disclosure is indicated by the scope of claims rather than by the description of the embodiment, and is intended to include all modifications within the scope and meaning equivalent to the scope of the claims.

## Claims

1. A power supply system (101), the power supply system (101) being a power supply system that supplies alternating current power from a system power supply (900) to a power load (123) of a house (101A), the power supply system (101) comprising:
a current breaker (1) configured to receive the alternating current power from the system power supply (900) to the house (101A) and disconnect the alternating current power during at least one of leakage or overcurrent;
a load breaker (113) configured to electrically disconnect the current breaker (1) and the power load (123) from each other;
a power conversion device (3) configured to supply, in a case where a vehicle (4) is connected, alternating current power from the vehicle (4) to the power load (123);
a first switch (51) configured to switch electrical connection and disconnection between the current breaker (1) and the load breaker (113); and
a second switch (52) configured to switch electrical connection and disconnection between the first switch (51) and the power conversion device (3) and switch electrical connection and disconnection between the load breaker (113) and the power conversion device (3).

2. The power supply system (101) according to claim 1, wherein:
the house (101A) includes a power conditioning system (7) configured to receive generated power of a photovoltaic power generation device (8);
the power conversion device (3; 6) is configured to charge, in a case where the vehicle (4) is connected, the vehicle (4) with alternating current power from the power conditioning system (7); and
the power supply system (101) further comprises a third switch (53) configured to switch electrical connection and disconnection between the power conditioning system (7) and the power conversion device (3; 6).

3. The power supply system (101) according to claim 1, wherein:
the power conversion device (3; 6) is further configured to charge, in a case where the vehicle (4) is connected, the vehicle (4) with alternating current power from the current breaker (1); and
the power supply system (101) further comprises a third switch (53) configured to switch electrical connection and disconnection between the current breaker (1) and the power conversion device (3; 6).

4. The power supply system (101) according to any one of claims 1 to 3, wherein, in a case where the vehicle (4) is connected to the power conversion device (3) and a current electricity charge is higher than an electricity charge at a time when power currently charged in the vehicle (4) is charged, the first switch (51) is opened and the second switch (52) is closed.

5. The power supply system (101) according to claim 4, wherein, in a case where the vehicle (4) is connected to the power conversion device (3) and the current electricity charge is higher than an electricity charge at a time when the vehicle (4) is previously charged, the first switch (51) is opened and the second switch (52) is closed.

6. The power supply system (101) according to any one of claims 1 to 3, further comprising a control device (10) configured to control the first switch (51) and the second switch (52), wherein:
the control device (10) is configured to, in a case where power is supplied from the system power supply (900) to the power load (123), close the first switch (51) and open the second switch (52); and
the control device (10) is configured to, in a case where power is supplied from the vehicle (4) to the power load (123), open the first switch (51) and close the second switch (52).

7. The power supply system (101) according to claim 2 or 3, further comprising a control device (10) configured to control the first switch (51), the second switch (52), and the third switch (53), wherein:
the control device (10) is configured to, in a case where power is supplied form the vehicle (4), open the first switch (51), close the second switch (52), and open the third switch (53);
the control device (10) is configured to, in a case where power is charged to the vehicle (4), close the first switch (51), open the second switch (52), and close the third switch (53); and
the control device (10) is configured to, in a case where power is not supplied from the vehicle (4) and power is not charged to the vehicle (4), close the first switch (51), open the second switch (52), and open the third switch (53).
